# EUROPEAN PATENT APPLICATION

(11) **EP 3 838 695 A1**
(43) Date of publication of application: **23.06.2021**
(21) Application number: 19864446.0
(22) Date of filing: 30.07.2019
(51) Int. Cl.: B60T 13/74

(54) **BRAKE SYSTEM HAVING TWO INDEPENDENT CONTROL FUNCTIONS AND METHOD FOR CONTROLLING SAME**

(30) Priority: 27.09.2018 CN 201811129731
(71) Applicant: Bethel Automotive Safety Systems Co., Ltd., Wuhu, Anhui 241009 (CN)
(72) Inventor: QIANG, Yulin, Wuhu, Anhui 241009 (CN); YUAN, Xiaofeng, Wuhu, Anhui 241009 (CN); YUAN, Yongbin, Wuhu, Anhui 241009 (CN)
(74) Representative: Canzler & Bergmeier Patentanwälte Partnerschaft mbB
(86) International application number: PCT/CN2019/098260
(87) International publication number: WO 2020/063090

(57) **Abstract**

A brake system having two independent control functions and a method for controlling the same. The brake system is provided with a first brake control unit (S1) and a second brake control unit (S2). Each of the first brake control unit (S1) and the second brake control unit (S2) independently carries out a parking control function.

## Description

### FIELD OF THE INVENTION

The present disclosure relates to a vehicle brake control system, in particular, to a vehicle brake control system having two independent control units.

### BACKGROUND

With the development of electronically controlled brake systems and brake control technology, in the field of new parking control technology solutions, there has been a need for dual independent control to offer better safety for vehicles. At the same time, with the wide application of the Electronic Parking Brake (EPB) System, more ways are needed to improve the parking safety function of EPB, and EPB has become an inevitable choice for the new generation of parking solutions, especially when applied to new energy vehicles and self-driving vehicles.

However, in the prior art, the cancellation of the P-gear locking mechanism, the failure of the public power supply, the failure of the control decision module, the failure of the switch, etc. in EPB electronic parking lead to the failure of the entire EPB system, and multiple independent parking brake control lacks mature and feasible technical solutions.

### SUMMARY

The present disclosure provides a brake system having two independent control units, which is applied to braking of a vehicle, the vehicle includes a vehicle communication network and power supplies. The brake system includes a first brake control unit and a second brake control unit, each of which is able to independently complete a brake control function.

The first brake control unit and the second brake control unit are respectively connected with the vehicle communication network through a first communication circuit and a second communication circuit.

The first brake control unit is connected with a first parking request module, and the second brake control unit is connected with a second parking request module.

The first brake control unit includes a first control decision module, a first parking drive module, and a first parking actuator; the first control decision module is connected with the first communication circuit and the first parking request module through signal lines; the first parking drive module is respectively connected with the first control decision module and the first parking actuator through signal lines.

The second brake control unit includes a second control decision module, a second parking drive module, and a second parking actuator; the second control decision module is connected with the second communication circuit and the second parking request module through signal lines; the second parking drive module is respectively connected with the second control decision module and the second parking actuator through signal lines.

The first control decision module and the second control decision module interact with the vehicle communication network for unit status information through the first communication circuit and the second communication circuit respectively, for parking brake control.

The first control decision module and the second control decision module communicate with each other through signal lines; and the first brake control unit and the second brake control unit communicate with each other through the first control decision module and the second control decision module.

The first brake control unit and the second brake control unit are respectively connected with the power supplies.

The present disclosure further provides a method for controlling a brake system having two independent control units. The method is as follows:
when both a first brake control unit and a second brake control unit are working normally, independently controlling a first parking drive module and a second parking drive module through the first brake control unit and the second brake control unit, and independently driving a first parking actuator and a second parking actuator through the first parking drive module and the second parking drive module, to realize auxiliary service braking or parking braking;
when a power supply fails during a process of supplying the first brake control unit, driving the second parking actuator by the second brake control unit through the second parking drive module according to a control logic, to achieve auxiliary service braking or parking braking;
when a power supply fails during a process of supplying the second brake control unit, driving the first parking actuator by the first brake control unit through the first parking drive module according to the control logic, to achieve auxiliary service braking or parking braking;
when one of a first control decision module, the first parking drive module, and the first drive parking actuator fails, executing auxiliary service braking or parking braking by the second brake control unit;
when one of a second control decision module, the second parking drive module, and the second drive parking actuator fails, executing the auxiliary service brake or the parking brake by the first brake control unit;
when a first parking request module or a second parking request module fail, receiving vehicle status information through a first communication circuit and a second communication circuit, and if necessary, slowly braking the vehicle at a certain deceleration by the first brake control unit and the second brake control unit using a set control algorithm according to vehicle requirements to achieve safe auxiliary service braking or parking braking.

The auxiliary service braking or parking braking includes: executing a signal request or a parking request from the vehicle communication network; or executing a certain braking function by the first brake control unit and the second brake control unit.

The first brake control unit and the second brake control unit implement a parking function by receiving a signal request or parking request from the vehicle communication network.

The present disclosure adopts the above technical solution to improve the reliability and safety of vehicles. In the brake system having two independent control units, two sets of key parking request information, vehicle information interaction, and control decision modules are set up independently and may operate independently, which means that two sets of EPBs are in operation. Portability is therefore realized. Two sets of EPB systems may be deployed and developed separately, or may be respectively integrated in another control system to realize their respective braking functions independently. The technical solution is also energy-saving: the parking of the present disclosure may substitute the traditional P-gear parking, and therefore the vehicle would not need to be equipped with a P-gear locking mechanism, which reduces the weight of the vehicle and saves energy and reduces emissions, and may reduce the drag force on the brake pads of rear brake discs and reduce fuel consumption.

### BRIEF DESCRIPTION OF THE DRAWINGS

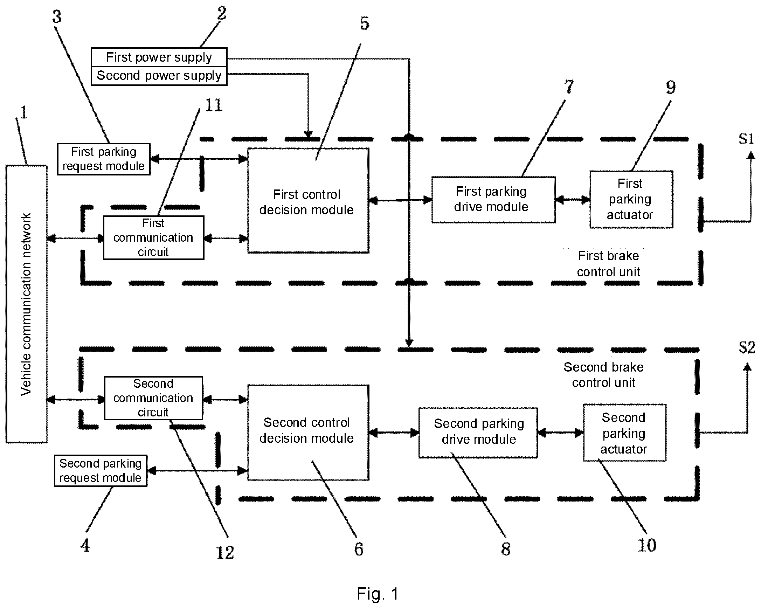

Fig. 1 shows a schematic view of a control logic according to some embodiments of the present disclosure.

### List of reference numerals:

1. Vehicle communication network; 2. Power supply; 3. First parking request module; 4. Second parking request module; 5. First control decision module; 6. Second control decision module; 7. First parking drive module; 8. Second parking drive module; 9. First parking actuator; 10. Second parking actuator; 11. First communication circuit; 12. Second communication circuit; S1. First brake control unit; S2. Second brake control unit

### DESCRIPTION OF THE SPECIFIC EMBODIMENTS

With reference to the accompanying drawings, the specific implementation of the present disclosure will be further described in detail through the description of embodiments to help those skilled in the art have a more complete, accurate and in-depth understanding of the inventive concept and technical solution of the present disclosure.

Fig. 1 shows a brake system having two independent control units which is applied to the parking and braking of a vehicle. The vehicle may be a passenger vehicle or a commercial vehicle.

In Fig. 1, "→" indicates a signal direction; "-" indicates a line connection; "---" indicates a block diagram line which circles blocks that represent brake control units.

As shown in Fig. 1, the brake system having two independent control units includes a first brake control unit S1 and a second brake control unit S2. The first brake control unit S1 and the second brake control unit S2 are control units that independently complete a brake control function.

The first brake control unit S1 and the second brake control unit S2 may operate independently of each other without interfering with each other, and at the same time may also communicate with each other to realize work coordination.

The present disclosure offers protection to vehicles in the following ways:
1. The first brake control unit S1 and the second brake control unit S2 are connected in parallel, and the two control system units operate independently.
2. The first brake control unit S1 includes a first parking drive module 7, and the second brake control unit S2 includes a second parking drive module 8, so that the failure mode does not occur where the two sets of drive modules simultaneously interfere with the control of the vehicle.
3. Control logic: the first brake control unit S1 and the second brake control unit S2 mutually monitor the working status as between one of the two brake control units and the entire vehicle to achieve the real-time judgment of the two independent brake control units, thereby responding to braking and parking requests in time.
4. The first brake control unit S1 and second brake control unit S2 may respond separately to braking and parking signals from CAN network and parking request modules (a first parking request module 3 and a second parking request module 4) and achieve parking through the above functional logic.

Some beneficial effects of one or more aspects of the present disclosure are as follows:
1. Reliable and safe: in the brake system having two independent control units, two sets of parking brake control units are set up independently, may operate independently, and may independently control the each brake drive module, which means that two sets of EPBs are in operation, and redundant backup is added to the system.
2. Portable: two sets of EPB systems may be deployed and developed separately, or may be integrated in another control system, such as a vehicle body electronic stability system, vehicle body controller, vehicle controller, electronic steering controller, airbag controller, and battery management controller.
3. Energy-saving: the parking of the present disclosure may substitute the traditional P-gear parking, and therefore the vehicle does not need to be equipped with a P-gear locking mechanism, which reduces the weight of the vehicle and is beneficial to energy saving and emission reduction.

The first brake control unit S1 and the second brake control unit S2 are connected with the vehicle communication network 1 through a first communication circuit 11 and a second communication circuit 12 respectively.

The first communication circuit 11 and the second communication circuit 12 are connection paths for the control decision modules to receive other network signals of the vehicle. Through the control decision modules, the parking system may perform logic calculation and realize driving functions based on obtained real-time information.

The two parking brake control units receive vehicle status information through a corresponding CAN communication circuit for parking brake control. The vehicle status information includes, but is not limited to, switch signals, engine signals, vehicle speed signals, acceleration signals, braking signals, wheel speed signals, pressure signals, steering signals, temperature signals, etc.

Specifically, the first brake control unit S1 is connected with the first parking request module 3, and the second brake control unit S2 is connected with the second parking request module 4. The signal lines connected between the first parking request module 3 and the second parking request module 4 carry vehicle status signals, including but not limited to parking switch signals, acceleration signals, brake stroke signals, master cylinder pressure signals, and temperature signals.

The second parking request module 4 is a connection path for the second control decision module to receive an external request, the request includes but is not limited to a EPB switch, a P-gear switch, and network request signals. After receiving the signals, the second control decision module 4 calculates and decides on a parking function to be implemented according to the signals that represent the status of the vehicle.

The first brake control unit S1 includes a first control decision module 5, the first parking drive module 7, and a first parking actuator 9. The first control decision module 5 is connected with the first communication circuit 11 and the first parking request module 3 through signal lines. The first parking drive module 7 is respectively connected with the first control decision module 5 and the first parking actuator 9 through signal lines.

The first control decision module 5 is connected with the first parking drive module 7 through a control line. The first parking drive module 7 is connected with the first parking actuator 9 through a control line.

The second brake control unit S2 includes a second control decision module 6, the second parking drive module 8, and a second parking actuator 10. The second control decision module 6 is connected with the second communication circuit 12 and the second parking request module 4 through signal lines. The second parking drive module 8 is respectively connected with the second control decision module 6 and the second parking actuator 10 through signal lines.

The second control decision module 6 is connected with the second parking drive module 8 through a control line. The second parking drive module 8 is connected with the second parking actuator 10 through a control line.

The first parking request module 3 and the second parking request module 4 are independently connected with the first brake control unit S1 and the second brake control unit S2 through signal lines.

The second parking request module 4 is not limited to a parking switch or network signal.

The first control decision module 5 and the second control decision module 6 both receive the vehicle status information through the first communication circuit 11 and the second communication circuit 12 respectively for parking brake control.

The first control decision module 5 is connected with the second communication circuit 11 through a signal line, and the second control decision module 6 is connected with the second communication circuit 12 through a signal line.

The control decision modules and the parking drive modules are respectively connected by logic circuits. The parking drive modules and the parking actuators are respectively connected by signal lines. The parking request modules are connected with the control decision modules through signal lines. The two control decision modules are connected with each other through signal lines.

The first control decision module 5 and the second control decision module 6 are connected through signal lines and may be communicated with each other. The first brake control unit S1 and the second brake control unit S2 communicate with each other through the first control decision module 5 and the second control decision module 6.

The first control decision module 5 and the second control decision module 6 are the core control decision modules of the entire system, and their functions include, but are not limited to, intelligent control and logic circuit control. The first control decision module 5 and the second control decision module 6 are connected with each of the modules and circuits, thereby realizing the signal interaction, logic calculation and control between the modules and circuits.

The first parking drive module 7 and the second parking drive module 8 are connection paths for the control decision modules to control the parking actuators, and are the centers that drive the parking actuators and feedback parking process signals.

The first parking actuator 9 and the second parking actuator 10 are two complete sets of independent institutions. In some embodiments, the first parking actuator 9 and the second parking actuator 10 are arranged on a drive shaft or wheel side of the vehicle. Generally, the first parking actuator 9 and the second parking actuator 10 are arranged on mechanical parts related to braking.

The above-mentioned "signal line(s)" is a general term for general-purpose or special-purpose logic circuits.

The first brake control unit S1 and the second brake control unit S2 are respectively connected with the power supply 2.

The power supply 2 includes two independent working power sources, a first power supply and a second power supply, each of which provides power to one of the two brake control units.

The first brake control unit S1 and the first power supply can work independently of the second brake control unit S2 and the second power supply, and vice versa. As mentioned above, the power supply 2 includes two independent working power supplies. The power supply 2 provides two power supplies, one for the first brake control unit S1 and one for the second brake control unit S2.

The present disclosure further provides a method for controlling the brake system having two independent control units disclosed herein. The method is described below.

When both the first brake control unit S1 and the second brake control unit S2 are working normally, the first parking drive module 7 and the second parking drive module 8 are independently controlled through the first brake control unit S1 and the second brake control unit S2, and the first parking actuator 9 and the second parking actuator 10 are independently driven through the first parking drive module 7 and the second parking drive module 8, to realize a parking brake function.

A parking request control signal is received by the first brake control unit S1 and the second brake control unit S2, and the parking drive modules are controlled according to a certain logic algorithm through the first control decision module 5 and the second control decision module 6, thereby controlling the first parking actuator 9 and the second parking actuator 10 to realize a safe parking brake function.

The first brake control unit S1 and the second brake control unit S2 communicate with each other: when both units are working normally, the brake system with two dependent control functions operates with full functionalities.

When the power supply 2 fails during a process of supplying the first brake control unit S1, the second parking actuator 10 is driven by the second brake control unit S2 through the second parking drive module 8 according to a control logic, to achieve parking braking; here, the second control decision module 6 drives the second parking actuator 10 through the second parking drive module 8 according to the control logic and algorithm to realize parking and safe braking.

When the power supply 2 fails during a process of supplying the second brake control unit S2, the first parking actuator 9 is driven by the first brake control unit S1 through the first parking drive module 7 according to a control logic, to achieve parking braking; here, the first control decision module 5 drives the first parking actuator 9 through the first parking drive module 7 according to the control logic and an algorithm to realize parking and safe braking.

The brake system having two independent control units can ensure that if either of the two brake control units fails, the other unit can control the corresponding parking drive module to drive the corresponding parking actuator to achieve braking and parking.

When one of the first control decision module 5, the first parking drive module 7, and the first drive parking actuator 9 fails, the second control decision module 6 executes parking braking through the second brake control unit S2 according to the control logic algorithm to achieve parking.

When one of the second control decision module 6, the second parking drive module 8, and the second drive parking actuator 10 fails, the first control decision module 5 executes parking braking through the first brake control unit S1 according to the control logic algorithm.

When the first parking request module 3 and the second parking request module 4 fail, the vehicle status information is received by the first communication circuit 11 and the second communication circuit 12. The vehicle is gradually slowed down at a certain deceleration using a set control algorithm by the first brake control unit S1 and the second brake control unit S2 to achieve a safe parking braking. Here, based the vehicle status information, the first brake control unit S1 and the second brake control unit S2 judge the vehicle status with a certain control algorithm, and drive the parking actuators through the parking drive modules to achieve parking and safe braking.

At the same time as the above process, if the vehicle communication network 1 performs a signal request, the first brake control unit S1 and the second brake control unit S2 perform a certain braking function, which can also realize the above-mentioned safe parking braking.

At the same time as the above process, if the above process requests a brake signal from outside of the vehicle, the brake control units can also realize an emergency safe parking function through a certain control algorithm.

The functions realized by the method for controlling a brake system having two independent control units includes:
1. The first brake control unit S1 and the second brake control unit S2 can made a judgment based on signals from the parking request modules to either clamp or release brakes during parking.
2. Since the first brake control unit S1 and the second brake control unit S2 are provided, it can be ensured that if either one of the two units fails, the other unit can control the corresponding motor drive module to drive the corresponding parking actuator to achieve parking, and one brake control unit can satisfy more than 8% of the ramp parking functions required by Chinese regulations.
3. The first brake control unit S1 and the second brake control unit S2 can receive information from the vehicle communication network and execute a service brake demand from the network.
4. Parking request signals received by the first brake control unit S1 and the second brake control unit S2 realize an anti-lock braking function during the driving process of the vehicle by calculating and determining the operating status of the vehicle.
5. The first brake control unit S1 and the second brake control unit S2 can derive the value of a parking clamping force when given the value of an inclination signal to achieve reliable parking.
6. The first brake control unit S1 and the second brake control unit S2 can monitor temperature characteristics, vehicle slipping trend, time, and other information in real time, and apply parking force for multiple times by controlling the first parking actuator 9, to ensure the safety of the vehicle on a slope.

The present disclosure can mitigate the parking reliability risk and ensure the parking safety of the vehicle while complying with laws and regulations. By adopting the two independent brake control units, the present disclosure not only improves vehicle safety and reduces energy consumption, but also reduces vehicle costs by removing the P-gear locking system.

While particular elements, embodiments, and applications of the present invention have been shown and described, it is understood that the invention is not limited thereto because modifications may be made by those skilled in the art, particularly in light of the foregoing teaching. It is therefore contemplated by the appended claims to cover such modifications and incorporate those features which come within the spirit and scope of the invention.

## Claims

1. A brake system having two independent control units, applied to braking of a vehicle, wherein the vehicle includes a vehicle communication network and power supplies, wherein the brake system comprises:
a first brake control unit; and
a second brake control unit, wherein the first brake control unit and the second brake control unit are control units that independently complete a brake control function.

2. The brake system having two independent control units according to claim 1, wherein the first brake control unit and the second brake control unit are respectively connected with the vehicle communication network through a first communication circuit and a second communication circuit.

3. The brake system having two independent control units according to claim 1, wherein the first brake control unit is connected with the first parking request module, and the second brake control unit is connected with the second parking request module.

4. The brake system having two independent control units according to claim 3,
wherein the first brake control unit includes a first control decision module, a first parking drive module, and a first parking actuator, wherein the first control decision module is connected with the first communication circuit and the first parking request module through signal lines, wherein the first parking drive module is respectively connected with the first control decision module and the first parking actuator through signal lines,
wherein the second brake control unit includes a second control decision module, a second parking drive module, and a second parking actuator, wherein the second control decision module is connected with the second communication circuit and the second parking request module through signal lines, wherein the second parking drive module is respectively connected with the second control decision module and the second parking actuator through signal lines,
wherein the first control decision module and the second control decision module interact with the vehicle communication network respectively for unit status information through the first communication circuit and the second communication circuit, for parking brake control.

5. The brake system having two independent control units according to claim 4, wherein the first control decision module and the second control decision module communicate with each other through signal lines, and the first brake control unit and the second brake control unit communicate with each other through the first control decision module and the second control decision module.

6. The brake system having two independent control units according to claim 1, wherein the first brake control unit and the second brake control unit are respectively connected with the power supplies.

7. A method for controlling the brake system having two independent control units according to any one of claims 1 to 6, wherein
when both the first brake control unit and the second brake control unit are working normally, independently controlling a first parking drive module and a second parking drive module through the first brake control unit and the second brake control unit, and independently driving a first parking actuator and a second parking actuator through the first parking drive module and the second parking drive module, to realize auxiliary service braking or parking braking;
when the power supply fails during a process of supplying the first brake control unit, driving the second parking actuator through the second parking drive module according to a control logic by the second brake control unit, to achieve auxiliary service braking or parking braking;
when the power supply fails during a process of supplying the second brake control unit, driving the first parking actuator through the first parking drive module according to the control logic by the first brake control unit, to achieve auxiliary service braking or parking braking;
when one of a first control decision module, the first parking drive module, and the first drive parking actuator fails, executing auxiliary service braking or parking braking by the second brake control unit;
when one of a second control decision module, the second parking drive module, and the second drive parking actuator fails, executing auxiliary service braking or parking braking by the first brake control unit; and
when a first parking request module or a second parking request module fail, receiving vehicle status information through a first communication circuit and a second communication circuit, and gradually slowing down the vehicle by the first brake control unit and the second brake control unit at a certain deceleration using a set control algorithm according to vehicle requirements to achieve safe auxiliary service braking or parking braking.

8. The method according to claim 7, wherein the auxiliary service braking or parking braking includes:
executing a signal request or a parking request from the vehicle communication network; or
executing a certain braking function by the first brake control unit and the second brake control unit.

9. The method according to claim 7, wherein the first brake control unit and the second brake control unit implement a parking function by receiving a signal request or parking request from the vehicle communication network.
